# EUROPÄISCHE PATENTANMELDUNG

(11) **EP 2 927 646 A1**
(43) Veröffentlichungstag der Anmeldung: **07.10.2015**
(21) Anmeldenummer: 14162590.5
(22) Anmeldetag: 31.03.2014
(51) Int. Cl.: G01D 5/244, G01L 25/00, G01L 3/10

(54) **Verfahren zur Korrektur von Messfehlern**

(71) Anmelder: Siemens Aktiengesellschaft, 80333 München (DE)
(72) Erfinder: Brummel, Hans-Gerd, 13465 Berlin (DE); Linnert, Uwe, 90766 Fürth (DE); Pfeifer, Uwe, 12557 Berlin (DE)

(57) **Zusammenfassung**

Die Erfindung gibt ein Verfahren zur Korrektur von Messfehlern eines zeitauflösenden Messsignals (S) an, welches eine Messung an einem Prüfkörper darstellt, der mit einer Grundfrequenz (f) eine periodische Bewegung durchführt, wobei das Messsignal (S) in den Frequenzraum transformiert wird, wobei für eine Anzahl von harmonischen Frequenzen (fⱼ) der Grundfrequenz (f) eine Anzahl an Amplitudenkennwerten (Aⱼ) ermittelt wird, wobei aus dem oder jedem Amplitudenkennwert (Aⱼ) eine Anzahl von Korrelationskennwerten (Aₛᵤₘ, A_{rel,k}) ermittelt wird, wobei der oder jeder Korrelationskennwert (Aₛᵤₘ, A_{rel,k}) zur Bildung einer Anzahl von Korrekturwerten (KAⱼ) herangezogen wird, und wobei aus dem oder jedem Korrekturwert (KAⱼ) ein Korrektursignal (FA) zum Messsignal (S) gebildet wird. Die Erfindung gibt weiter einen Drehmomentsensor (1) zur magneto-elastischen Bestimmung eines Drehmoments an einer Welle (8) an, welcher eine Auswerteelektronik (12) umfasst, die dazu eingerichtet ist, das Verfahren durchzuführen.

## Beschreibung

Die Erfindung betrifft ein Verfahren zur Korrektur von Messfehlern eines zeitauflösenden Messsignals, welches eine Messung an einem Prüfkörper darstellt, der mit einer Grundfrequenz eine periodische Bewegung durchführt. Die Erfindung betrifft weiter einen Drehmomentsensor und eine Wärmekraftmaschine.

In einem Wärmekraftwerk kann zur besseren Kontrolle der Leistung und/oder des Wirkungsgrades das Drehmoment ermittelt werden, welches im zugrunde liegenden thermodynamischen Kreisprozess auf eine Welle einer Turbine ausgeübt wird. Hierbei kann es von Nutzen sein, eine kontaktlose Messung durchzuführen, da für diese keinerlei zusätzliche Komponenten wie Skalenringe oder Dehnungsmessstreifen an der Welle angeordnet werden müssen, deren Verbindung mit der Welle zudem auf hohe Rotationsgeschwindigkeiten auszulegen wäre.

Als eine vorteilhafte kontaktlose Messung des Drehmoments hat sich dabei eine solche Messung herausgestellt, welche auf dem magneto-elastischen Effekt basiert, welcher ebenso als inverse Magnetostriktion bekannt ist. Bei dieser Messung wird durch einen Geber in einem Sensor ein Magnetfeld erzeugt, welches in die Oberfläche des magnetisierbaren Prüfkörpers eindringt. Durch ein Drehmoment auf den Prüfkörper findet in diesem aufgrund der Kräfte auf die Weiss'schen Bezirke eine lokale Permeabilitätsänderung statt, welche in Richtung und Betrag vom Drehmoment abhängt. Die durch den Geber induzierten Wirbelströme in der Oberfläche des Prüfkörpers weisen somit eine vom Drehmoment abhängige Vorzugsrichtung auf, welche ihrerseits über Induktionsspannungen in dafür im Sensor vorhergesehenen Spulen detektiert werden kann.

Aufgrund der sehr unterschiedlichen magnetischen Permeabilität des Prüfkörpers und des Luftspaltes zwischen dem Prüfkörper und dem Sensor ist die magneto-elastische Drehmomentmessung abstandsabhängig. Dieser Abstand kann bei einer in einem hydrostatischen Gleitlager rotierenden Welle, wie sie in einem Wärmekraftwerk oft eingesetzt wird, variieren, da die Welle im Gleitlager zur möglichst reibungsfreien Rotation ein geringes Spiel aufweist, in welchem sich die Welle, von der Wand des Gleitlagers durch einen Schmierstoff getrennt, bewegt. Überdies können im Betrieb durch die hohen Krafteinwirkungen auch geringe elastische Verformungen der Welle stattfinden, welche sich ebenso auf den Abstand zwischen dem Drehmomentsensor und der Oberfläche der Welle und somit auf das Drehmomentsignal auswirken können.

Zur Kalibrierung werden daher oftmals zwei Abstandssensoren in unmittelbarer Nähe des Drehmomentsensors angeordnet, und aus den jeweiligen Signalen der Abstandsmessungen und der geometrischen Beziehung zum Drehmomentsensor ein Korrektursignal errechnet. Aus Platzgründen ist eine derartige Abstandsmessung aber oftmals nicht möglich. Zudem liefern die Abstandssignale aufgrund der Dreidimensionalität der Abstandsbeziehungen zwischen dem Drehmomentsensor, der Oberfläche der Welle als Prüfkörper und den beiden Abstandssensoren oft nicht den realen Abstand des Drehmomentsensors.

Überdies kommt bei der Messung des Drehmomentes über die magneto-elastische Messung der durch das Drehmoment induzierten Torsionsspannungen in der Oberfläche der Welle hinzu, dass bereits beim Fertigungsprozess der Welle, welche meist aus einem gehärteten, wärmebehandelten und geschmiedeten Stahl besteht, in der Oberfläche mechanische Restspannungen "eingefroren" sind. Diese Restspannungen sind zufällig über die Oberfläche verteilt, ihre Auswirkung im Ausgangssignal entspricht somit einer in der der jeweiligen momentanen Rotationsfrequenz periodischen Modulation des Sensorsignals mit einem Rauschsignal.

Es ist Aufgabe der Erfindung, ein möglichst einfaches Verfahren zur Korrektur von Messfehlern in einem Signal anzugeben, welches bei einer zeitauflösenden Messung an einem sich periodisch bewegenden Prüfkörper aufgenommen wird. Weiter ist es Aufgabe der Erfindung, eine Vorrichtung anzugeben, welche ein derartiges Verfahren durchführt.

Die erstgenannte Aufgabe wird erfindungsgemäß gelöst durch ein Verfahren zur Korrektur von Messfehlern eines zeitauflösenden Messsignals, welches eine Messung an einem Prüfkörper darstellt, der mit einer Grundfrequenz eine periodische Bewegung durchführt, wobei das Messsignal in den Frequenzraum transformiert wird, wobei für eine Anzahl von harmonischen Frequenzen der Grundfrequenz eine Anzahl an Amplitudenkennwerten ermittelt wird, wobei aus dem oder jedem Amplitudenkennwert eine Anzahl von Korrelationskennwerten ermittelt wird, wobei der oder jeder Korrelationskennwert zur Bildung einer Anzahl von Korrekturwerten herangezogen wird, und wobei aus dem oder jedem Korrekturwert ein Korrektursignal zum Messsignal gebildet wird.

Hierbei ist unter einer periodischen Bewegung mit einer Grundfrequenz eine solche Bewegung verstanden, bei welcher eine Variation der Grundfrequenz um Größenordnungen kleiner ist als die Grundfrequenz selbst.

Der Erfindung liegen hierbei folgende Überlegungen zugrunde:
Insbesondere bei einer periodischen Bewegung des Prüfkörpers, beispielsweise einer Rotation oder einer Schwingung, können Messfehler aufgrund der Periodizität der Bewegung selbst auftreten. Dies kann beispielsweise aufgrund eines schwankenden Abstands des Prüfkörpers zum Sensor, der die Messung aufnimmt, oder aufgrund schwankender mechanischer Schub-, Zug-, oder Scherspannungen erfolgen. Im Messsignal können sich hierdurch Muster von periodischen Maxima und Minima ergeben. Eine Veränderung der eigentlich zu messenden physikalischen Größe stellt sich dann im Messsignal im Wesentlichen als eine zur Zeitachse orthogonale Verschiebung des Musters aus Maxima und Minima dar, wobei die Amplitudenbreite, also der Abstand zwischen einem Maximum und dem nächstgelegenen Minimum, weitgehend konstant bleibt.

Es wäre hierbei zunächst naheliegend, diese Verschiebung dadurch zu isolieren, dass man die Maxima und Minima, beispielsweise durch eine Differenz- oder eine Mittelwertbildung, aus dem Signal herausrechnet. Treten jedoch zeitabhängige Änderungen der zu messenden physikalischen Größe mit einer beliebigen Frequenz und einer im Verhältnis zur Amplitudenbreite des Signals geringen Amplitude auf, würde bei einer Differenz- oder Mittelwertbildung der Maxima und Minima auch die Auflösung der zu messenden physikalischen Änderungen der Messgröße verloren gehen.

Es ist somit eine zentrale Erkenntnis der Erfindung, dass insbesondere im Fall einer physikalischen Größe, deren zu messende Veränderungen in der Größenordnung von Messfehlern liegen, die aufgrund der Periodizität der Bewegung des Prüfkörpers auftreten, die Messfehler im Messsignal durch ein separates Korrektursignal zu korrigieren sind, welches die Periodizität der Fehler berücksichtigt. Somit ist das Korrektursignal zumindest teilweise im Frequenzraum aus den Amplituden bei einer Anzahl an harmonischen Frequenzen der Grundfrequenz zu generieren. Die Korrelationen, welche die Amplituden bei verschiedenen harmonischen Frequenzen zueinander aufweisen, können dann über entsprechende Korrekturwerte zur Bildung des Korrektursignals herangezogen werden.

Vorzugsweise wird hierbei das Messsignal mittels einer Fast Fourier Transformation (FFT) in den Frequenzraum transformiert. Die zur Berechnung der FFT erforderlichen Kennwerte, wie beispielsweise die Punktanzahl und die Fensterfunktion, sind dabei bevorzugt vorab auf die im Verfahren gewünschte Auflösung der Amplitude und der Frequenzbänder zu optimieren. Ein derartiges Vorgehen erlaubt eine möglichst effiziente Auslastung der für das Verfahren zu Verfügung stehenden Prozessorleistung.

In einer vorteilhaften Ausgestaltung der Erfindung wird der oder jeder Amplitudenkennwert gebildet durch die Maximalamplitude des Messsignals in einem Schmalband um die jeweilige harmonische Frequenz. Das jeweilige Schmalband weist hierbei vorzugsweise eine ausreichende Bandbreite auf, um das entsprechende Maximum sicher ermitteln zu können, und ist insbesondere schmal genug zu wählen, um nur eine signifikante Linie zu umfassen. Die Bildung eines Amplitudenkennwertes über eine Maximalamplitude stellt eine besonders einfache und damit wenig rechenintensive Vorschrift dar.

Alternativ dazu wird in einer weiter vorteilhaften Ausgestaltung der Erfindung der oder jeder Amplitudenkennwert durch den quadratischen Mittelwert des Messsignals in einem Schmalband um die jeweilige harmonische Frequenz gebildet. Das jeweilige Schmalband weist hierbei vorzugsweise eine ausreichende Bandbreite auf, um signifikante Seitenlinien ausreichend zu berücksichtigen. Die Bildung eines Amplitudenkennwertes über einen quadratischen Mittelwert ist insbesondere bei einem im Frequenzraum stärker fluktuierenden Signal von Vorteil.

Vorzugsweise wird für eine Folge von harmonischen Frequenzen der Grundfrequenz, beginnend mit der ersten Harmonischen, jeweils ein Amplitudenkennwert ermittelt. Unter einer Folge ist hierbei eine endliche Folge im mathematischen Sinn zu verstehen, d.h., beginnend mit der ersten Harmonischen, wird für eine Anzahl aufeinanderfolgender harmonischer Frequenzen jeweils ein zugehöriger Amplitudenkennwert ermittelt. Bei niederen harmonischen Frequenzen ist die Aussagekraft der Amplituden über mögliche systematische periodische Messfehler am größten. Die Untersuchung von Korrelationen aus Amplitudenkennwerten, welche bei aufeinanderfolgenden harmonischen Frequenzen gewonnen werden, verbessert im Vergleich zu willkürlich gewählten harmonischen die Auflösung der zu untersuchenden Korrelationen. Die zur Auswertung größte harmonische Frequenz kann dabei bestimmt werden durch die Grenzfrequenz des Sensors, welcher das Messsignal aufnimmt, oder durch die spektrale Unterscheidbarkeit eines Amplitudenmaximums bei dieser Frequenz.

Als vorteilhaft erweist es sich, wenn ein Korrelationskennwert durch die Summe aller ermittelten Amplitudenkennwerte gebildet wird. Durch eine Summenbildung lassen sich Korrelationen, welche in den Amplitudenkennwerten auftreten, besonders einfach weiterverarbeiten.

Als weiter vorteilhaft erweist es sich, wenn ein Korrelationskennwert durch die Summe aller ermittelten Amplitudenkennwerte, dividiert durch einen der ermittelten Amplitudenkennwerte, gebildet wird. Insbesondere kann es sich bei dem Amplitudenkennwert im Nenner hierbei um den für die erste harmonische Frequenz ermittelten Amplitudenkennwert handeln. Eine derartige Normierung über den Amplitudenkennwert einer harmonischen Frequenz, insbesondere der ersten, kann bei einer weiteren Signalverarbeitung von Nutzen sein, in welcher nichtlineare Berechnungen auftreten.

Günstigerweise wird das Korrektursignal zum Messsignal als ein Polynom des oder jedes Korrekturwertes berechnet, welches dem Messsignal hinzumultipliziert wird. Insbesondere kann dabei das Messsignal vor der Multiplikation tiefpassgefiltert werden, um ungewünschte Messfehler herauszufiltern, welche mit einer Frequenz fluktuieren, die erheblich über der Grundfrequenz der Bewegung des Prüfkörpers liegt. Ein polynomiales Korrektursignal hat hierbei den Vorteil, dass das Korrektursignal effektiv als Beginn der Potenzreihenentwicklung in dem oder jedem Korrekturwert zu bilden ist, wodurch nur die jeweiligen Parameter der Potenzreihe zu bestimmen sind. Dies kann beispielsweise durch eine numerische Anpassung vor Beginn der Korrektur des Messsignals geschehen.

Günstigerweise ist der Prüfkörper aus einem magnetisierbaren, insbesondere aus einem ferromagnetischen Material gefertigt, wobei die Messung auf dem magneto-elastischen Effekt basiert. Das vorbeschriebene Verfahren ist für die Korrektur eines Signals, welches bei einer solchen Messung aufgenommen wird, besonders geeignet. Eine Messung, welche auf dem magnetoelastischen Effekt basiert, erfordert zunächst die Magnetisierbarkeit des zu vermessenden Prüfkörpers.

Bei einer derartigen Messung wird durch einen magnetischen Geber im Sensor in der Oberfläche des Prüfkörpers ein Magnetfeld induziert. Die Rückkopplung der durch diese Induktion auftretenden Wirbelströme im Prüfkörper auf Induktionsspulen im Sensor ist aufgrund der unterschiedlichen magnetischen Permeabilität des Prüfkörpers und des Luftspaltes zwischen dem Sensor und dem Prüfkörper abstandsabhängig. Führt der Prüfkörper nun eine periodische Bewegung durch, kann dies zu einer periodischen Abstandsänderung führen, welche im Sensorsignal periodische Messfehler zur Folge hat. Das angegebene Verfahren ist besonders geeignet, derartige Messfehler zu korrigieren, selbst wenn diese im Signal in einer ähnlichen Größenordnung dargestellt sind wie eine zu messenden mechanische Spannung auf den Prüfkörper.

Als weiter vorteilhaft erweist es sich, wenn der Prüfkörper eine Rotationsbewegung durchführt. Bei einer Rotationsbewegung des Prüfkörpers kann die Rotation selbst zu Messfehlern führen, für dessen Korrektur das Verfahren besonders geeignet ist. Diese Messfehler können dabei insbesondere aus einer Abstandsabhängigkeit der Messung in Verbindung mit Abstandsänderungen infolge der Rotation resultieren. Die Abstandsänderungen können dabei beispielsweise durch Orbitbewegungen einer Welle bedingt sein, welche mit dem Prüfkörper drehfest verbunden ist, in einem Gleitlager, welches die Rotation aufnimmt.

Zweckmäßigerweise wird hierbei das Verfahren zur Korrektur einer Drehmomentmessung verwendet. Der Prüfkörper, an welchem die Messung durchgeführt wird, ist dabei bevorzugt eine Welle, auf welche das zu messende Drehmoment einwirkt. Insbesondere kann die Drehmomentmessung auf dem magnetoelastischen Effekt basieren. In einem solchen Fall können mechanische Restspannungen, welche durch der Fertigung der Welle in deren Oberfläche eingefroren werden, zu periodischen Signalanteilen führen, die als eine Art von "Fingerprint" im Verfahren zur Abstandskorrelation nutzbar gemacht werden können.

Die zweitgenannte Aufgabe wird erfindungsgemäß gelöst durch einen Drehmomentsensor zur magneto-elastischen Bestimmung eines Drehmoments an einer Welle, umfassend eine Auswerteelektronik, welche dazu eingerichtet ist, das vorbeschriebene Verfahren durchzuführen. Die für das Verfahren und seine Weiterbildungen angegebenen Vorteile können dabei sinngemäß auf den Drehmomentsensor übertragen werden.

Zweckmäßigerweise ist ein derartiger Drehmomentsensor in einer Wärmekraftmaschine angeordnet, welche weiter wenigstens eine Welle umfasst. Bevorzugt misst der Drehmomentsensor an der wenigstens einen Welle ein Drehmoment zur Kontrolle der Leistung und/oder des Wirkungsgrades der Wärmekraftmaschine. Die durch das in der Auswerteelektronik des Drehmomentsensors durchgeführte, vorbeschriebene Verfahren erhöhte Genauigkeit der Messung wirkt sich dabei vorteilhaft auf die Kontrolle der überwachten Betriebsparameter und somit auf den Gesamtbetrieb der Wärmekraftmaschine aus.

Nachfolgend wird ein Ausführungsbeispiel der Erfindung anhand einer Zeichnung näher erläutert. Hierbei zeigen:
- FIG 1: ein zeitaufgelöstes Messsignal einer an einer rotierenden Welle durchgeführten Drehmomentmessung,
- FIG 2: ein in den Frequenzraum transformiertes Messsignal einer Messung nach FIG 1,
- FIG 3: ein schematisches Flussdiagramm einer möglichen Ausgestaltung des Verfahrens, und
- FIG 4: in schematischer Darstellung eine Wärmekraftmaschine mit einem Drehmomentsensor.

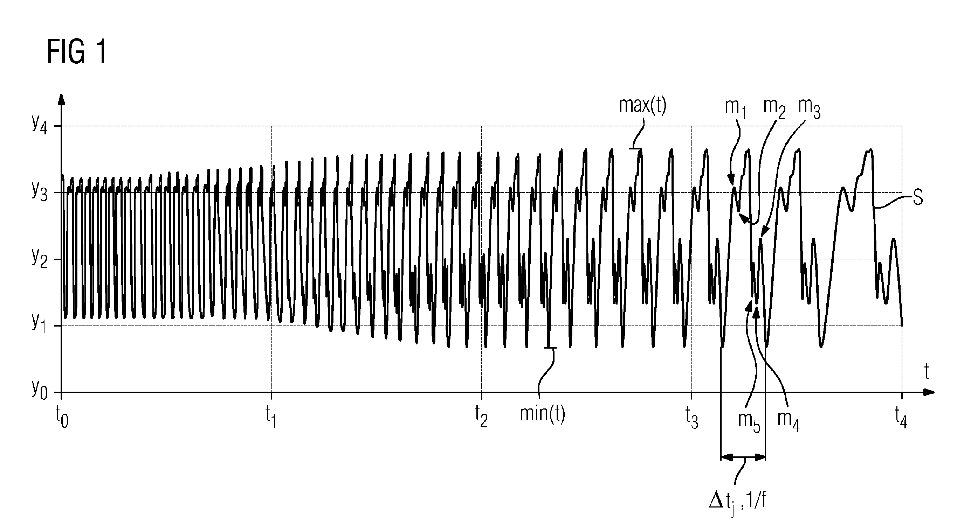

In FIG 1 ist ein zeitaufgelöstes Messsignal S gezeigt. Das Messsignal S stellt dabei eine Drehmomentmessung dar, welche auf dem magneto-elastischen Effekt basiert, und an einer rotierenden Welle aufgenommen ist. Die Skalierung t₀, ..., t₄ der Abszissenachse ist hierbei ebenso wie die Skalierung y₀, ..., y₄ der Ordinatenachse, an welcher die Amplitude des Messsignals S gegen die Zeit t aufgetragen ist, in willkürlichen Einheiten vorgenommen.

Das Messsignal S weist Oszillationen zwischen Minima min(t) und Maxima max(t) auf, wobei mit fortschreitender Zeit t die Amplituden der Minima min(t) und der Maxima max(t) leicht zunehmen, und sich die zeitlichen Abstände zwischen zwei Minima min(t), min(t+Δtⱼ) bzw. zwischen zwei Maxima max(t) zunehmend vergrößern. Die Rotationsfrequenz nimmt somit über den Verlauf der Messung ab. Diese Oszillationen sind bedingt durch eine Orbitbewegung der Welle in einem Gleitlager, wodurch eine elliptische Abstandsvariation bei jeder vollen Rotationsperiode eintritt. Da die magneto-elastische Drehmomentmessung eine Abhängigkeit von Abstand zwischen dem Sensor und dem Prüfkörper aufweist, wird diese Abstandsvariation im Messsignal abgebildet. Die Periode Δtⱼ zwischen zwei Minima min(t), min(t+Δtⱼ) entspricht daher genau einer Umdrehung, und somit auch dem Kehrwert der momentanen Grundfrequenz f der Rotation. Daraus folgt, dass die Grundfrequenz f der in FIG 1 dargestellten Rotation mit zunehmender Messdauer abnimmt.

Kleinere lokale Modulationen mit lokalen Extrema m₁, ..., m₅ innerhalb einer Periode Δtⱼ sind dabei auf fertigungsbedingte, in der Oberfläche der Welle eingefrorene Restspannungen zurückzuführen, welche als mechanische Spannungen ebenso vom Sensor erfasst werden, und dabei eine periodische Modulation des Messsignals S erzeugen.

Ein zusätzliches reales Drehmoment von konstantem Betrag auf die Welle stellt sich nun im Messsignal S als eine vertikale Verschiebung dar. Sind die zu messenden Änderungen im realen Drehmoment in ihrer Amplitude geringer als die Differenz der Maxima max(t) und Minima min(t) und in ihrer zeitlichen Dauer in der Größenordnung weniger Perioden Δtⱼ, so kann das reale Drehmoment nicht durch eine einfache Differenzbildung der Maxima max(t) und der Minima min(t) ermittelt werden. Infolge der lokalen Extrema m₁, ..., m₅ ist auch eine zeitliche Mittelwertbildung ungeeignet. Die lokalen Extrema m₁, ..., m₅ können jedoch als eine Art "Fingerprint" dazu dienen, im Frequenzraum Abstandskorrelationen zwischen den Amplitudenwerten zu verschiedenen harmonischen Frequenzen der Grundfrequenz herzustellen.

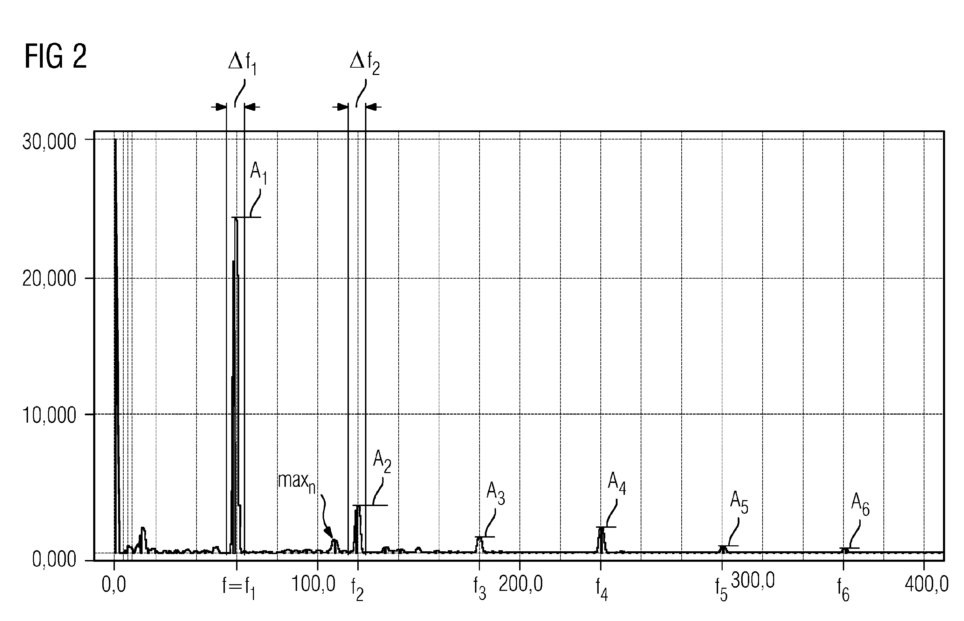

In FIG 2 ist ein mittels einer FFT in den Frequenzraum transformiertes Messsignal S' eines Messsignals nach FIG 1 dargestellt. Die Amplituden der einzelnen Frequenzkomponenten des Messsignals sind hierbei bis zu Abszissenwerten von ca. 415Hz dargestellt, wobei die Skalierung der Ordinatenachse in willkürlichen Einheiten, jedoch linear erfolgt. Die Grundfrequenz f der Rotation, und somit die erste Harmonische f₁, beträgt 60Hz, die folgenden harmonischen Frequenzen f₂ bis f₆ liegen bei den entsprechenden Vielfachen der Grundfrequenz f vor. Zu den harmonischen Frequenzen f₁ bis f₆ werden jeweils die Maximalamplituden in einem Schmalband Δfⱼ um die jeweilige Frequenz als Amplitudenkennwerte A₁ bis A₆ ermittelt.

Alternativ zur Maximalamplitude können die Amplitudenkennwerte A₁ bis A₆ auch als quadratische Mittelwerte der Amplitude im jeweiligen Δfⱼ gewählt werden. Hierbei ist jedoch insbesondere zu beachten, dass das Schmalband Δfⱼ ausreichend breit zu wählen ist, um signifikante Amplitudenbeiträge zu umfassen, jedoch eng genug, um Beiträge, welche einer anderen Amplitude zuzuordnen sind, auszugrenzen. So ist z.B. darauf zu achten, dass im Schmalband Δf₂ um die zweite harmonische Frequenz f₂ das Nebenmaximum maxₙ bei ca. 105Hz nicht umfasst ist. Die ermittelten Amplitudenkennwerten A₁ bis A₆ können nun dazu herangezogen werden, Abstandskorrelationen herzustellen, und um ein Korrektursignal zum ursprünglichen Messsignal S zu generieren.

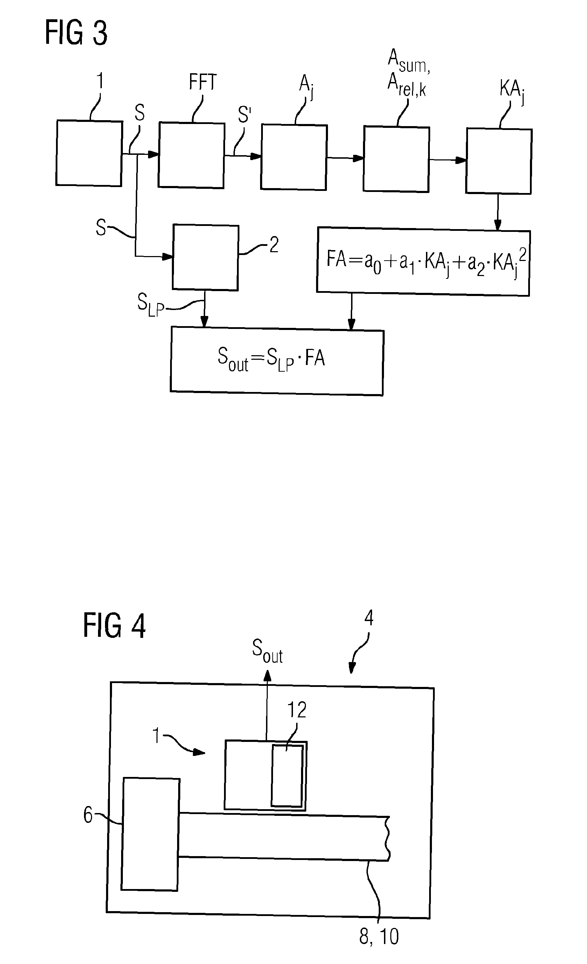

In FIG 3 ist ein schematisches Flussdiagramm einer möglichen Ausgestaltung des Verfahrens dargestellt. Ein Drehmomentsensor 1 nimmt hierbei ein zeitaufgelöstes Messsignal S auf. Dieses wird mittels einer schnellen Fourier-Transformation FFT in ein frequenzaufgelöstes Signal S' umgewandelt. Bei harmonischen Frequenzen der Grundfrequenz der Rotation werden, wie soeben zu FIG 2 beschrieben, Amplitudenkennwerte Aⱼ ermittelt. Aus den Amplitudenkennwerten Aⱼ wird dann entweder über Summenbildung der einzelnen Amplitudenkennwerte Aⱼ ein Korrelationskennwert Aₛᵤₘ errechnet. Alternativ dazu kann auch ein Korrelationskennwert A_{rel,k} mittels Summenbildung der Amplitudenkennwerte Aⱼ und anschließender Normierung der Summe über einen bestimmten Amplitudenkennwert Aₖ errechnet werden. Die Korrelationskennwerte Aₛᵤₘ, A_{rel,k} geben hierbei durch die in die Summe der Amplitudenkennwerte Aⱼ eingehenden Korrelationen Aufschluss über die zeitliche Variation des Abstandsfehlers im Messsignal S.

Die Korrelationskennwerte Aₛᵤₘ, A_{rel,k} werden nun zur Bildung eines Korrekturwertes KAⱼ herangezogen, wobei ein Korrekturwert auch durch eine einfache lineare Funktion KAⱼ = c · A_{rel,k} mit einem zu bestimmenden Faktor c gebildet sein kann. Aus dem Korrekturwert KAⱼ wird anschließend das Korrektursignal als ein Polynom in KAⱼ gebildet. In diesem Fall ist FA quadratisch im Korrekturwert KAⱼ. Die Koeffizienten a₀, a₁ und a₂ des Polynoms sowie ggf. der Faktor c können hierbei durch Testuntersuchungen und numerische Anpassungen vor Inbetriebnahme des Drehmomentsensors 1 ermittelt werden. Das ursprüngliche Messsignal S von Drehmomentsensor 1 wird in einem Tiefpass 2 gefiltert, und das finale Ausgangssignal Sₒᵤₜ als Produkt des tiefpassgefilterten Messsignals S_{LP} und des Korrektursignals FA ausgegeben.

In FIG 4 ist schematisch eine Wärmekraftmaschine 4 mit einem Generator 6 dargestellt, auf welchen über eine Welle 8 ein Drehmoment übertragen wird. Die Welle 8 stellt hierbei den durch einen Drehmomentsensor 1 zu vermessenden Prüfkörper 10 dar. Der Drehmomentsensor weist hierbei eine Auswerteelektronik 12 auf, die dazu eingerichtet ist, das vorbeschriebene Verfahren durchzuführen. Der Drehmomentsensor 1 gibt somit ein korrigiertes Ausgangssignal Sₒᵤₜ aus.

Obwohl die Erfindung im Detail durch das bevorzugte Ausführungsbeispiel näher illustriert und beschrieben wurde, ist die Erfindung nicht durch dieses Ausführungsbeispiel eingeschränkt. Andere Variationen können vom Fachmann hieraus abgeleitet werden, ohne den Schutzumfang der Erfindung zu verlassen.

## Patentansprüche

1. Verfahren zur Korrektur von Messfehlern eines zeitaufgelösten Messsignals (S), welches eine Messung an einem Prüfkörper (10) darstellt, der mit einer Grundfrequenz (f) eine periodische Bewegung durchführt,
wobei das Messsignal (S) in den Frequenzraum transformiert wird,
wobei für eine Anzahl von harmonischen Frequenzen (fⱼ) der Grundfrequenz (f) eine Anzahl an Amplitudenkennwerten (Aⱼ) ermittelt wird,
wobei aus dem oder jedem Amplitudenkennwert (Aⱼ) eine Anzahl von Korrelationskennwerten (Aₛᵤₘ, A_{rel,k}) ermittelt wird,
wobei der oder jeder Korrelationskennwert (Aₛᵤₘ, A_{rel,k}) zur Bildung einer Anzahl von Korrekturwerten (KAⱼ) herangezogen wird,
und wobei aus dem oder jedem Korrekturwert (KAⱼ) ein Korrektursignal (FA) zum Messsignal (S) gebildet wird.

2. Verfahren nach Anspruch 1,
wobei das Messsignal (S) mittels einer Fast Fourier Transformation (FFT) in den Frequenzraum transformiert wird.

3. Verfahren nach Anspruch 1 oder Anspruch 2,
wobei der oder jeder Amplitudenkennwert (Aⱼ) gebildet wird durch die Maximalamplitude des Messsignals im Frequenzraum (S') in einem Schmalband (Δfⱼ) um die jeweilige harmonische Frequenz (fⱼ).

4. Verfahren nach Anspruch 1 oder Anspruch 2,
wobei der oder jeder Amplitudenkennwert (Aⱼ) gebildet wird durch den quadratischen Mittelwert des Messsignals im Frequenzraum (S') in einem Schmalband (Δfⱼ) um die jeweilige harmonische Frequenz (fⱼ).

5. Verfahren nach einem der vorhergehenden Ansprüche, wobei für eine Folge von harmonischen Frequenzen (fⱼ) der Grundfrequenz (f), beginnend mit der ersten Harmonischen (f₁), jeweils ein Amplitudenkennwert (Aⱼ) ermittelt wird.

6. Verfahren nach einem der vorhergehenden Ansprüche, wobei ein Korrelationskennwert (Aₛᵤₘ) durch die Summe aller ermittelten Amplitudenkennwerte (Aⱼ) gebildet wird.

7. Verfahren nach einem der vorhergehenden Ansprüche, wobei ein Korrelationskennwert (A_{rel,k}) durch die Summe aller ermittelten Amplitudenkennwerte (Aⱼ), dividiert durch einen der ermittelten Amplitudenkennwerte (Aⱼ), gebildet wird.

8. Verfahren nach einem der vorhergehenden Ansprüche, wobei das Korrektursignal (FA) zum Messsignal (S) als ein Polynom des oder jedes Korrekturwertes (KAⱼ) berechnet wird, welches dem Messsignal (S) hinzumultipliziert wird.

9. Verfahren nach einem der vorhergehenden Ansprüche, wobei der Prüfkörper (10) aus einem magnetisierbaren, insbesondere aus einem ferromagnetischen Material gefertigt ist, und wobei die Messung auf dem magneto-elastischen Effekt basiert.

10. Verfahren nach einem der vorhergehenden Ansprüche, wobei der Prüfkörper (10) eine Rotationsbewegung durchführt.

11. Verfahren nach Anspruch 10,
welches zur Korrektur einer Drehmomentmessung verwendet wird.

12. Drehmomentsensor (1) zur magneto-elastischen Bestimmung eines Drehmoments an einer Welle (8), umfassend eine Auswerteelektronik (12), welche dazu eingerichtet ist, ein Verfahren nach einem der vorhergehenden Ansprüche durchzuführen.

13. Wärmekraftmaschine (4), umfassend wenigstens eine Welle (8) und einen Drehmomentsensor (1) nach Anspruch 12.
